(19) 

Europäisches
Patentamt

European
Patent Office

Office européen
des brevets

(11) **EP 4 769 141 A1**

(12) **EUROPEAN PATENT APPLICATION**
published in accordance with Art. 153(4) EPC

(43) Date of publication:
 **01.07.2026  Bulletin 2026/27**

(21) Application number: **24916773.5**

(22) Date of filing: **27.12.2024**

(51) International Patent Classification (IPC):
 **G06F 9/48** (2006.01)

(52) Cooperative Patent Classification (CPC):
 **G06F 9/48; G06F 9/50**

(86) International application number:
 **PCT/CN2024/143343**

(87) International publication number:
 **WO 2025/148726 (17.07.2025 Gazette 2025/29)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **10.01.2024  CN 202410041940**

(71) Applicant: **Honor Device Co., Ltd.
 Shenzhen 518040 (CN)**

(72) Inventors:
 • **LIU, Lu
   Shenzhen, Guangdong 518040 (CN)**
 • **ZHU, Khejia
   Shenzhen, Guangdong 518040 (CN)**

(74) Representative: **Isarpatent
 Patent- und Rechtsanwälte Part G mbB
 Friedrichstrasse 31
 80801 München (DE)**

(54) **TASK MANAGEMENT METHOD AND RELATED DEVICE**

(57)  Embodiments of this application provide a task management method and a related device. The method includes: recording a start execution time and an end execution time for each execution of a task within a statistical window; collecting a frequency at which a processor of an electronic device executes the task; calculating a normalized execution duration of the task based on the start execution time, the end execution time, and the frequency; determining an intra-window load of the task based on the normalized execution duration of the task; determining an intra-window load ratio of the task based on the intra-window load of the task and the statistical window; and if the intra-window load ratio of the task is greater than or equal to a preset threshold, determining that the task is a high-load task, and managing the task based on a preset policy. In embodiments of this application, a high-load task can be accurately identified, and the high-load task can be managed, to prevent the high-load task from affecting the execution of a critical task. This effectively reduces system power consumption.

FIG. 5

# EP 4 769 141 A1

## Description

### CROSS REFERENCE TO RELATED APPLICATIONS

This application claims priority to Chinese Patent Application No. 202410041940.9, filed with the China National Intellectual Property Administration on January 10, 2024 and entitled "TASK MANAGEMENT METHOD AND RELATED DEVICE", which is incorporated herein by reference in its entirety.

### TECHNICAL FIELD

This application relates to the technical field of smart terminals, and in particular, to a task management method and a related device.

### BACKGROUND

In a process in which an application runs on a smart electronic device, for example, a smartphone and a personal computer, the application generates a large quantity of tasks. A system load of the smart electronic device increases due to long execution time of some high-load tasks. For example, utilization of resources such as processors and memories increases, leading to insufficient system resources for processing some critical scenarios or tasks. As a result, a system stalls, and user experience is affected.

### SUMMARY

In view of the foregoing content, it is necessary to provide a task management method, to resolve a problem that system resources for processing a critical task are insufficient due to excessively high utilization of system resources by a high-load task.

According to a first aspect, this application provides a task management method. The method is applied to an electronic device and includes: recording a start execution time and an end execution time for each execution of a task within a statistical window; collecting a frequency at which a processor of the electronic device executes the task; calculating a normalized execution duration of the task based on the start execution time, the end execution time, and the frequency; determining an intra-window load of the task based on the normalized execution duration of the task; determining an intra-window load ratio of the task based on the intra-window load of the task and the statistical window; and if the intra-window load ratio of the task is greater than or equal to a preset threshold, determining that the task is a high-load task, and managing the task based on a preset policy.

In the technical solution, the normalized execution duration of the task is calculated based on each execution duration of the task within the statistical window and the frequency of the processor, thereby accurately determining the load of the task within the statistical window. The load ratio of the task within the statistical window is determined managed based on the load of the task within the statistical window, whether the task is a high-load task is accurately identified based on the load ratio of the task within the statistical window, and the high-load task is managed. Therefore, the load of the processor is effectively reduced, and system power consumption is reduced.

In a possible implementation, the recording a start execution time and an end execution time for each execution of a task within a statistical window includes: creating a task listener, listening to, via the task listener, a thread for executing the task within the statistical window, recording a creation time of the thread as the start execution time, and recording a destruction time of the thread as the end execution time.

In the technical solution, a start execution time and an end execution time of the task in each execution process can be accurately determined.

In a possible implementation, the collecting a frequency at which a processor of the electronic device executes the task includes: in the execution process of the task, collecting a real-time frequency of the processor at an interval of a preset time cycle; and determining a maximum frequency or an average frequency in a plurality of collected frequencies of the processor as the frequency at which the processor executes the task.

In the technical solution, the frequency at which the processor executes the task can be accurately determined.

In a possible implementation, the calculating a normalized execution duration of the task based on the start execution time, the end execution time, and the frequency includes: calculating a difference between the end execution time and the start execution time, to obtain an execution duration of the task; and calculating a product of the execution duration of the task, a ratio of the frequency to a maximum frequency of the processor, and computing power of the processor, to obtain the normalized execution duration.

In the technical solution, the normalized execution duration of the task can be accurately calculated, and calculation standards for different types of processors and for execution durations of the task corresponding to different frequencies of processors can be unified. This avoids a difference between an execution duration of the task running on the different type of the processor and an execution duration of the task running at the different frequency of the different processor.

In a possible implementation, the determining an intra-window load of the task based on the normalized execution duration of the task includes: if the task is executed a plurality of times within the statistical window, calculating a sum of all normalized execution durations of the task executed a plurality of times within the statistical window, to obtain the intra-window load of the task; or if the task is executed once within the statistical window, determining, as the intra-window load of the task, the normalized execution duration of the task executed within the statistical window.

In the technical solution, the load of the task within the statistical window can be accurately calculated based on execution time of the task within the statistical window and each execution duration.

In a possible implementation, the determining an intra-window load ratio of the task based on the intra-window load of the task and the statistical window includes: calculating a ratio of the intra-window load of the task to the statistical window, to obtain the intra-window load ratio of the task.

In the technical solution, the load ratio of the task within the statistical window can be accurately determined, and the load ratio of the task within the statistical window can be used as a determining reference for the high-load task, thereby accurately determining whether the task is a high-load task.

In a possible implementation, the managing the task based on a preset policy includes: binding the task to a small-core processor of the electronic device, and executing, by the small-core processor, the task.

In the technical solution, the high-load task is executed via the small-core processor in a core binding manner. This prevents the high-load task from preempting resources for processing a critical task, reduces the load of the processor, and reduces the system power consumption.

In a possible implementation, the managing the task based on a preset policy includes: setting a utilization clamping parameter for the task by using a utilization clamping mechanism, to enable a small-core processor of the electronic device to execute the task.

In the technical solution, the small-core processor can process the high-load task by setting the utilization clamping parameter of the task. This prevents the high-load task from preempting the resources for processing the critical task, reduces the load of the processor, and reduces the system power consumption.

According to a second aspect, an embodiment of this application provides a task management method. The method is applied to an electronic device and includes: recording a start execution time and an end execution time for each execution of a task within each second of a preset time period; collecting a frequency at which a processor of the electronic device executes the task; calculating a normalized execution duration of the task based on the start execution time, the end execution time, and the frequency; determining a per-second normalized load of the task within the preset time period based on the normalized execution duration of the task; obtaining a per-second normalized load within a specified statistical window from the per-second normalized load of the task within the preset time period, where the specified statistical window is shorter than or equal to the preset time period; determining an actual normalized load of the task within the specified statistical window based on the per-second normalized load of the task within the specified statistical window, and a correspondence between a window load level, a statistical window, and an actual normalized load; determining a load tier of the task within the specified statistical window based on the actual normalized load of the task within the specified statistical window, and the correspondence between the window load level, the statistical window, and the actual normalized load; and if the load tier of the task within the specified statistical window is greater than or equal to a preset threshold tier corresponding to the specified statistical window, determining that the task is a high-load task, and managing the task based on a preset policy.

In the technical solution, load levels corresponding to different statistical windows can be determined based on the correspondence between the window load level, the statistical window, and the actual normalized load by determining the per-second normalized load of the task within the preset time period, without simultaneously calculating load data for different statistical windows. This reduces data storage overhead, and reduces memory occupation of task management data.

In a possible implementation, the recording a start execution time and an end execution time for each execution of a task within each second of a preset time period includes: creating a task listener, listening to, via the task listener, a thread for executing the task within each second, recording a creation time of the thread as the start execution time of the task, and recording a destruction time of the thread as the end execution time of the task.

In the technical solution, a start execution time and an end execution time of the task in each execution process can be accurately determined.

In a possible implementation, the calculating a normalized execution duration of the task based on the start execution time, the end execution time, and the frequency includes: calculating a difference between the end execution time and the start execution time, to obtain an execution duration of the task; and calculating a product of the execution duration of the task, a ratio of the frequency to a theoretical maximum frequency of the processor, and computing power of the processor, to obtain the normalized execution duration.

In the technical solution, the normalized execution duration of the task can be accurately calculated, and calculation standards for different types of processors and for execution durations of the task corresponding to different frequencies of processors can be unified. This avoids a difference between an execution duration of the task running on the different type of the processor and an execution duration of the task running at the different frequency of the different processor.

In a possible implementation, the determining an actual normalized load of the task within the specified statistical window based on the per-second normalized load of the task within the specified statistical window, and a correspondence between a window load level, a statistical window, and an actual normalized load includes: comparing the per-second normalized load of the task within the specified statistical window with a correspondence list of the window load level, the statistical window, and the actual normalized load, to determine a per-second load tier of the task; and determining an actual normalized load corresponding to the per-second load tier of the task in the correspondence list, and determining a sum of a plurality of actual normalized loads as the actual normalized load of the task within the specified statistical window.

In the technical solution, the actual normalized load of the task within the specified statistical window can be quickly determined in a table lookup manner. This effectively improves efficiency of obtaining the actual normalized load of the task.

In a possible implementation, the determining a load tier of the task within the specified statistical window based on the actual normalized load of the task within the specified statistical window, and the correspondence between the window load level, the statistical window, and the actual normalized load includes: comparing the actual normalized load of the task within the specified statistical window with the correspondence list of the window load level, the statistical window, and the actual normalized load, to determine the load tier of the task within the specified statistical window.

In the technical solution, the load tier of the task within the specified statistical window can be quickly determined in a table lookup manner. This effectively improves efficiency of determining the load tier of the task.

In a possible implementation, the managing the task based on a preset policy includes: binding the task to a small-core processor of the electronic device, and executing, by the small-core processor, the task.

In the technical solution, the high-load task is executed via the small-core processor in a core binding manner. This prevents the high-load task from preempting resources for processing a critical task, reduces the load of the processor, and reduces the system power consumption.

In a possible implementation, the managing the task based on a preset policy includes: setting a utilization clamping parameter for the task by using a utilization clamping mechanism, to enable a small-core processor of the electronic device to execute the task.

In the technical solution, the small-core processor can process the high-load task by setting the utilization clamping parameter of the task. This prevents the high-load task from preempting the resources for processing the critical task, reduces the load of the processor, and reduces the system power consumption.

According to a third aspect, this application provides an electronic device. The electronic device includes a memory and a processor; the memory is configured to store program instructions; and the processor is configured to read and execute the program instructions stored in the memory, and when the program instructions are executed by the processor, the electronic device is enabled to perform the foregoing task management method.

According to a fourth aspect, this application provides a chip. The chip is coupled to a memory in an electronic device, where the chip is configured to control the electronic device to perform the foregoing task management method.

According to a fifth aspect, this application provides a computer storage medium, where the computer storage medium stores program instructions, and when the program instructions are run on an electronic device, a processor of the electronic device is enabled to perform the foregoing task management method.

In addition, for technical effects brought by the third aspect to the fifth aspect, refer to the related descriptions of the method in the design of the method part. Details are not described herein again.

**BRIEF DESCRIPTION OF THE DRAWING**

FIG. 1 is a schematic diagram of a load type of an electronic device in a critical scenario according to an embodiment of this application;

FIG. 2 is a schematic diagram of a task type of an electronic device in a critical scenario according to an embodiment of this application;

FIG. 3 is a schematic diagram of a change in a load of an electronic device according to an embodiment of this application;

FIG. 4 is an architectural diagram of software of an electronic device according to an embodiment of this application;

FIG. 5 is a flowchart of a task management method according to an embodiment of this application;

FIG. 6 is a schematic diagram of time nodes of a task execution process according to an embodiment of this application;
FIG. 7 is a flowchart of a task management method according to another embodiment of this application;
FIG. 8 is a schematic diagram of an execution duration of a task within each second in 10 seconds according to an embodiment of this application;
FIG. 9 is a schematic diagram of a correspondence list of a window load level, a statistical window, and an actual execution duration according to an embodiment of this application;
FIG. 10 is a schematic diagram of window load levels of a task within different specified statistical windows according to an embodiment of this application; and
FIG. 11 is a diagram of a hardware architecture of an electronic device according to an embodiment of this application.

## DETAILED DESCRIPTION OF EMBODIMENTS

In embodiments of this application, terms "first" and "second" are used merely for the purpose of description, and shall not be construed as indicating or implying relative importance or implying a quantity of indicated technical features. Therefore, features limited by "first" and "second" may explicitly or implicitly include one or more such features. In the description of the embodiments of this application, the terms such as "exemplary" or "for example" are used to represent giving an example, an illustration, or a description. Any embodiment or design scheme described by using "example" or "for example" in embodiments of this application should not be construed as being more preferred or more advantageous than another embodiment or design scheme. Exactly, use of the term "exemplary" or "for example" is intended to present a concept in a specific manner.

Unless otherwise defined, meanings of all technical and scientific terms used in this specification are the same as those usually understood by persons skilled in the art to which this application belongs. The terms used in the specification of this application are merely intended to describe objectives of the specific embodiments, but are not intended to limit this application. It is to be understood that in this application, unless otherwise specified, "/" represents "or". For example, A/B may indicate A or B. In this application, "and/or" describes only an association relationship for describing associated objects and represents that three relationships may exist. For example, A and/or B may indicate three cases: Only A exists, both A and B exist, and only B exists. "At least one" represents one or more. "A plurality of" represents two or more. For example, "at least one of a, b, or c" may indicate seven cases: "a", "b", "c", "a and b", "a and c", "b and c", and "a, b, and c". In the absence of conflict, the following embodiments and features in the embodiments can be combined with one another.

For ease of understanding, some descriptions of concepts related to embodiments of this application are provided as examples for reference,

Process (process): a running activity of a computer program on a data set. As a basic unit for resource allocation and scheduling of a system, a process is the basis of a structure of an operating system. The process is a basic execution entity of a program. In a contemporary thread-oriented computer architecture, the process is a container for a thread. A program is description of instructions, data, and organization of the data, and the process is an entity of the program. One process may be regarded as an independent program with complete data space and code space in a memory. Data and variables of the one process solely belong to the one process.

Thread (thread): is a smallest unit of execution within a process, that is, a basic unit for executing scheduling of a processor. If the process is understood as a task logically completed by an operating system, the thread represents one of a plurality of possible subtasks that complete the task. In other words, the thread exists in the process. One process includes one or more threads, and the threads share same code and global data.

Task (task): includes actions performed when a user operates a computer and corresponding response events (such as tapping a mouse and tapping a right button of the mouse, opening a dialog box, closing a file, and starting a program). The task may be represented as an activity completed by software. In embodiments of this application, one task may be either one process or one thread. The task may be a plurality of serial operations that collectively achieve a specific objective, for example, reading data and storing the data in a memory. This task may be implemented as one process, or may be implemented as one thread (or as an interrupt task).

As configurations of smart electronic devices such as smartphones and personal computers become higher, a user has higher performance requirements for the smart electronic devices. Particularly, in a critical scenario in which human-machine interaction is frequent and visual perception is prominent, for example, in a scenario in which an application is started, fingerprint recognition is performed, and a display is turned on, the application is started quickly, the fingerprint recognition is performed quickly, and the display is turned on quickly, so that the user has better performance experience. However, in a process in which an application runs on a smart electronic device, the application generates a large quantity of tasks. In a human-machine interaction process, a system executes a task in the critical scenarios, and further executes a task generated by another application or service, for example, a system task or a task generated by a background application. A system load increases due to long execution time of some high-load tasks. For example, utilization of resources such as processors and memories increases, leading to insufficient system resources for processing some critical scenarios or tasks. As a result, a system stalls, and user experience is affected.

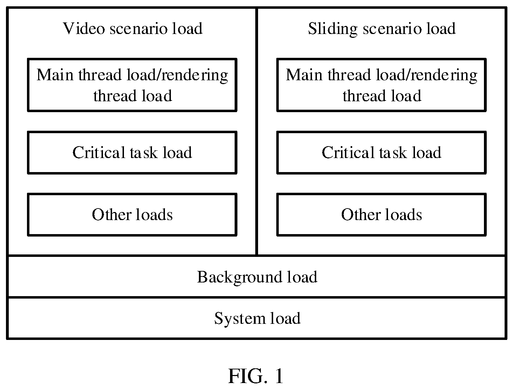

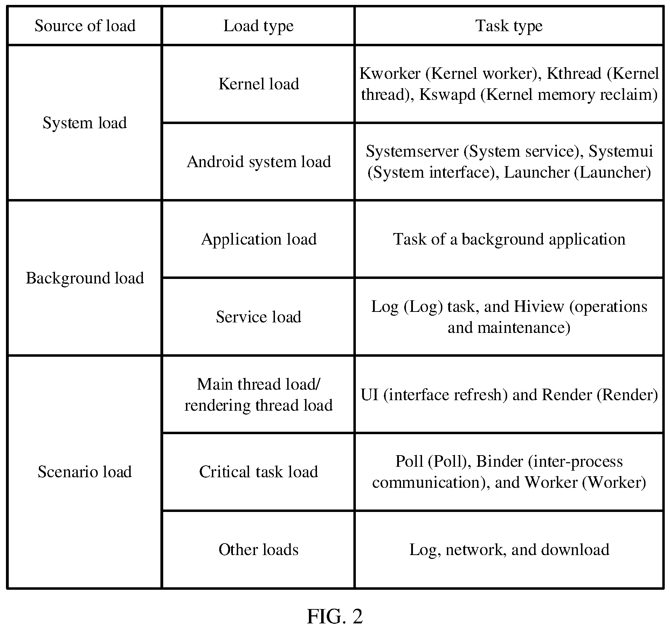

Refer to FIG. 1. In a critical scenario of playing a video or responding to a sliding operation of the user, the electronic device usually includes a main thread load/a rendering thread load, a critical task load, and other loads, and further includes a background load and a system load. Refer to FIG. 2. The main thread load/the rendering thread load may include a UI (interface refresh) task and a rendering (render) task, and the critical task load may include a polling (poll) task, a binder (inter-process communication) task, a worker (worker) task, and the like. The other load includes a log (log) task, a network access task, a download task, and the like. The background load includes a background application load and a background service load. The background application load is a load generated when the application runs in a background, and the background service load is a load generated when the system service runs in the background. The background service load includes a log (log) task, a hiview (operations and maintenance) task, and the like. The system load includes a kernel load and an Android operating system load. The kernel load includes Kworker (Kernel worker) task, a Kthread (Kernel thread) task, a Kswapd (Kernel memory reclaim) task, and the like. The Android operating system load includes a systemserver (system service) task, a systemui (system interface) task, a launcher (launcher) task, and the like. Therefore, even in the critical scenario, a system of the electronic device needs to execute a large quantity of tasks. If the system or the background generates a high-load task, processing resources of a big-core processor may be preempted. As a result, a critical task in the critical scenario cannot be processed in a timely manner, and the processor runs at a high frequency for a long time. This significantly increases system power consumption.

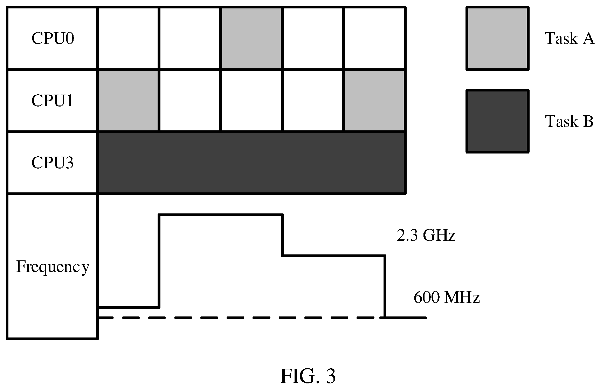

FIG. 3 shows a schematic diagram of a change in a load of an electronic device according to an embodiment of this application. In an embodiment, it is assumed that an electronic device includes three processors, namely, CPU0, CPU1, and CPU3. CPU1 executes a task A within a first statistical window and a fifth statistical window. Within the first statistical window, working frequencies of all CPUs are 600 MHz. Within the fifth statistical window, maximum working frequencies of all CPUs reach 2.3 GHz. CPU0 executes the task A within a third statistical window. Within the third statistical window, maximum working frequencies of all CPUs reach 2.3 GHz. CPU3 executes a task B within a first statistical window to the fifth statistical window. Therefore, the processor has a high load when executing the task A. However, it may be determined that the task A is a low-load task by the system due to a short execution time of the task A, and the task A is not managed. This causes high system power consumption. The processor has a low load when executing the task B. However, it may be determined that the task B is a high-load task by the system due to a long execution time of the task B, and the task B is not managed. As a result, the task B cannot be processed in a timely manner.

To prevent the high-load task from being inaccurately identified, an embodiment of this application provides a task management method and a normalized high-load task quantification manner, to accurately identify the high-load task, and manage the high-load task.

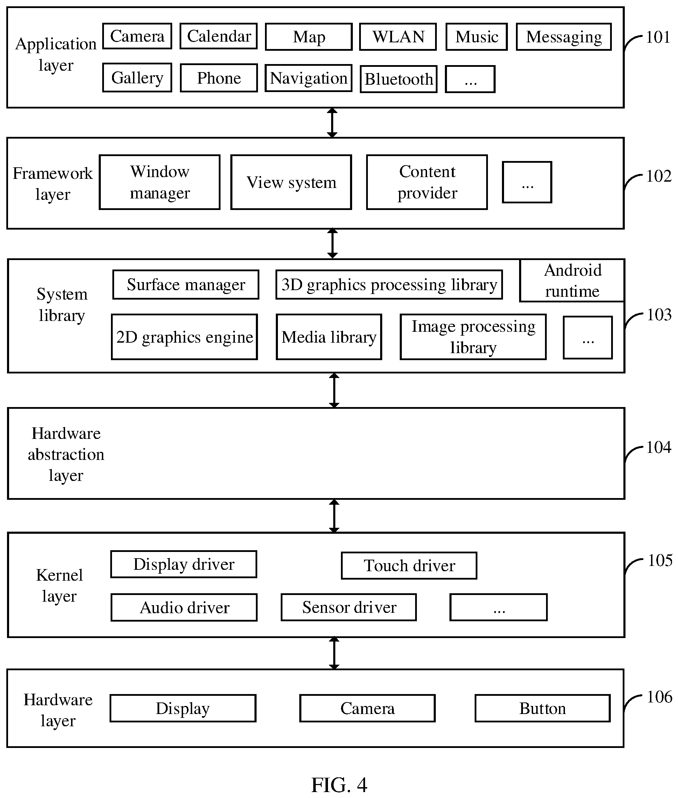

FIG. 4 shows an architectural diagram of software of an electronic device according to an embodiment of this application. In the layered architecture, software is divided into several layers, and each layer has a clear role and task. The layers communicate with each other by using a software interface. For example, the Android system is divided into four layers: an application layer 101, a framework layer 102, Android runtime (Android runtime) and system library 103, a hardware abstraction layer 104, a kernel layer 105, and a hardware layer 106.

The application layer 101 may include a series of application packages. For example, the application packages may include applications such as Camera, Gallery, Calendar, Call, Map, Navigation, WLAN, Bluetooth, Music, Video, Messages, and a device control service.

The framework layer 102 provides an application programming interface (Application Programming Interface, API) and a programming framework for the applications at the application layer. The application framework layer includes some predefined functions. For example, the application framework layer may include a window manager, a content provider, a view system, a phone manager, a resource manager, a notification manager, and the like.

The window manager service is used to manage a window program. The window manager may obtain a display size, determine whether the display has a status bar, lock the screen, take a screenshot, and the like. The content provider is configured to store and obtain data and make the data accessible to an application. The data may include a video, an image, an audio, calls that are made and answered, a browsing history, a bookmark, a phonebook, etc. The view system includes visual controls such as a control for displaying a text and a control for displaying an image. The view system may be configured to construct an application. A display interface may include one or more views. For example, a display interface including an SMS message notification icon may include a view for displaying a text and a view for displaying an image. The phone manager is configured to provide a communication function for the electronic device, for example, call status management (including connecting, hanging-up, and the like). The resource manager provides various resources, such as a localized character string, an icon, a picture, a layout file, and a video file, for an application. The notification manager enables an application to display notification information in the status bar that may be used to convey a message of a notification type, where the message may disappear automatically after a short stay without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information appears in the state bar for prompt, a prompt tone is made, the electronic device vibrates, or an indicator light flashes.

Android Runtime includes a kernel library and a virtual machine. The Android runtime is responsible for scheduling and managing the Android system. The core library includes two parts: a function that needs to be invoked by using the Java language, and a core library of Android.

The application layer 101 and the framework layer 102 run in the virtual machine. The virtual machine executes java files at the application layer and the framework layer as binary files. The virtual machine is configured to perform functions such as object lifecycle management, stack management, thread management, security and exception management, and garbage collection.

The system library 103 may include a plurality of functional modules, for example, a surface manager (surface manager), a media library (media libraries), a three-dimensional graphics processing library (for example, OpenGL ES), and a 2D graphics engine (for example, SGL)

The surface manager is configured to manage a display subsystem, and provide fusion of 2D and 3D layers for a plurality of application programs. The media library supports playback and recording in a plurality of commonly used audio and video formats, a still image file, and the like. The media library may support a plurality of audio and video encoding formats, such as MPEG4, H.264, MP3, AAC, AMR, JPG, PNG, and the like. The three-dimensional graphics processing library is configured to implement three-dimensional graphics drawing, image rendering, composition, layer processing, etc. The 2D graphics engine is a drawing engine for 2D drawing.

The hardware abstraction layer 104 runs in user space, encapsulates a kernel layer drive, and provides a call interface to an upper layer.

The kernel layer 105 is a layer between hardware and software. The kernel layer 105 includes at least a display driver, a camera driver, an audio driver, and a sensor driver.

The kernel layer 105 is a core of an operating system of the electronic device, is the first layer of software expansion based on hardware, provides the most basic functions of the operating system, is a basis of the operating system, and is responsible for managing processes, memory, device drivers, files, and network systems of the system, which determines performance and stability of the system. For example, a kernel may determine when an application operates on certain hardware.

The kernel layer 105 includes a program closely related to hardware, such as an interrupt handler and a device driver, further includes a basic and common module with relatively high operating frequency, such as a clock management module and a process scheduling module, and further includes a key data structure. The kernel layer may be disposed in a processor or solidified in an internal memory.

The hardware layer 106 includes hardware of the electronic device, for example, the display, the button, and the camera.

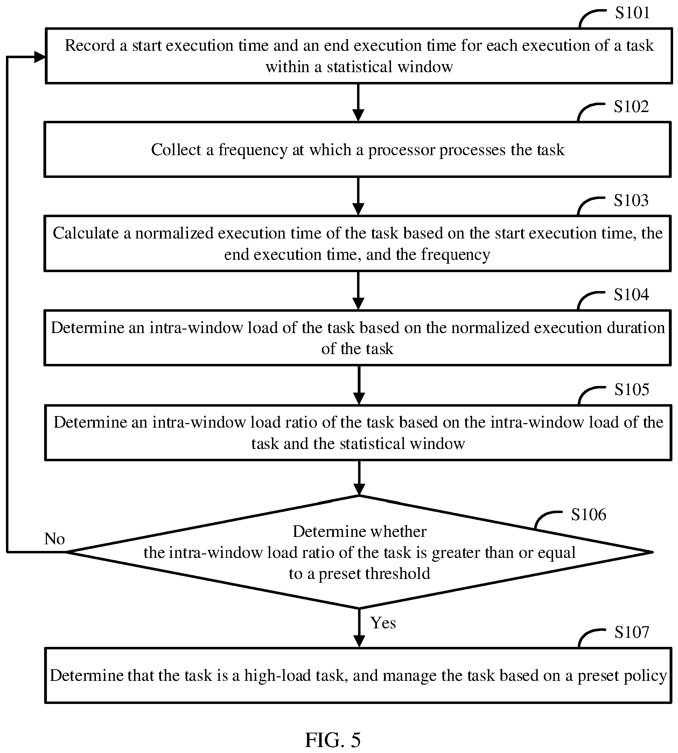

FIG. 5 shows a flowchart of a task management method according to an embodiment of this application. The method is applied to an electronic device, and the task management method includes the following steps.

S101: Record a start execution time and an end execution time for each execution of a task within a statistical window.

In an embodiment of this application, the statistical window is a time window for statistical analysis of a task load. After an electronic device is started and runs, a task management process is created, and a timer starts timing the statistical window. When the task management process detects that a processor starts processing the task, an elapsed time of the timer is marked. A task C is used as an example. A start execution time of the task C is recorded via the timer. When the processor completely processes the task C, an elapsed time of the timer is marked again, and an end execution time of the task C is recorded. The statistical window may be preset based on a requirement, for example, may be preset to 1 second, 3 seconds, 5 seconds, or another time.

In an embodiment of this application, the task management process may create a task listener, and the task listener listens to a thread executing the task C within the statistical window. When detected that the thread for executing the task C is created, the task listener records a creation time of the thread via the timer, and takes the creation time of the thread as the start execution time of the task C. When detected that the thread for executing the task C is destroyed, the task listener records a destruction time of the thread via the timer, and takes the destruction time of the thread as the end execution time of the task C.

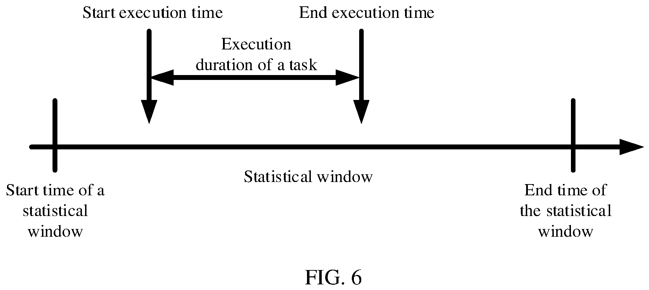

FIG. 6 shows a schematic diagram of time nodes of a task execution process according to an embodiment of this application. For example, if the statistical window is 5 seconds, the statistical window is timed via the timer. When detected that the thread for executing the task C is created, the task listener records the creation time of the thread via the timer, and takes the creation time of the thread as the start execution time of the task C. When detected that the thread for executing the task C is destroyed, the task listener records the destruction time of the thread via the timer, and takes the destruction time of the thread as the end execution time of the task C. In an embodiment of this application, the elapsed time of the timer may be a cumulative time measured from the start of the statistical window, or may be a system time, for example, Beijing time.

S102: Collect a frequency at which the processor executes the task.

In an embodiment of this application, when detecting that the processor starts executing the task, the task management process periodically collects a real-time frequency of the processor based on a preset time cycle, so as to collect a plurality of frequencies of the processor, and determine a maximum frequency or an average frequency of the plurality of frequencies of the processor as a frequency at which the processor executes the task. For example, the preset time cycle may be 5 ms, 10 ms, or another time.

In an embodiment of this application, the real-time frequency of the processor is automatically stored in a file sys/devices/system/cpu/cpuX/cpufreq/scaling_cur_freq, where cpuX represents a core of the processor. The task management process collects, by reading the file, the real-time frequency at which the processor executes the task.

S103: Calculate a normalized execution duration of the task based on the start execution time, the end execution time, and the frequency at which the processor executes the task.

In an embodiment of this application, a formula for calculating the normalized execution duration Taskrunningtime of the task based on the start execution time, the end execution time, and the frequency at which the processor executes the task is as follows:

$$Taskrunningtime = delta * \frac{curfreq}{maxfreq} * capacity \qquad (1).$$

In the calculation formula (1), delta (for example, delta shown in FIG. 6) is a difference between the end execution time and the start execution time of the task, and may be represented as an execution duration of the task; curfreq is the frequency at which the processor executes the task, for example, curfreq may be a maximum frequency or an average frequency of a plurality of frequencies collected in the process in which the processor executes the task; maxfreq is a theoretical maximum frequency of the processor, for example, 2.3 GHz, 2.8 GHz, 3.5 GHz, or another frequency; and capacity is a computing power value of the processor, for example, 512, 1024, 2048, or another value.

S104: Determine an intra-window load of the task based on the normalized execution duration of the task.

In an embodiment of this application, the intra-window load of the task is a load of the task within the statistical window. If the task is executed a plurality of times within the statistical window, a sum of all normalized execution durations of the task executed a plurality of times within the statistical window is calculated, to obtain the intra-window load of the task. If the task is executed once within the statistical window, the normalized execution duration of the task executed within the statistical window is determined as the intra-window load of the task.

In an embodiment of this application, a formula for calculating the sum of all normalized execution durations of the task executed a plurality of times within the statistical window and obtaining the intra-window load Taskloadwindow of the task is as follows:

$$Taskloadwindow = \sum_{k=0}^{n} Taskrunningtime \qquad (2).$$

In the calculation formula (2), n is total execution time of the task within the statistical window.

S105: Determine an intra-window load ratio of the task based on the intra-window load of the task and the statistical window.

In an embodiment of this application, a formula for calculating the ratio of the intra-window load of the task to the statistical window and obtaining the intra-window load ratio Highloadratewindow of the task is as follows:

$$Highloadratewindow = \frac{Taskloadwindow}{window} * 100\% \qquad (3).$$

In the calculation formula (3), Taskloadwindow is the intra-window load of the task, and window is a duration of the statistical window.

S106: Determine whether the intra-window load ratio of the task is greater than or equal to a preset threshold. If the intra-window load ratio of the task is greater than or equal to the preset threshold, perform S 107. If the intra-window load ratio of the task is smaller than the preset threshold, it indicates that the task is a low-load task, and the procedure returns to S101.

In an embodiment of this application, the preset threshold may be 80%, 90%, or another value.

S107: Determine that the task is a high-load task, and manage the task based on a preset policy.

In an embodiment of this application, if the task is determined as a high-load task, the task is managed in a core binding manner or by setting uclamp (utilization clamping parameter). The core binding is to bind the high-load task to a small-core processor, and process the high-load task by the small-core processor. This prevents a big-core processor from processing an excessive quantity of high-load tasks. The uclamp setting is to configure the utilization clamping parameter of the task based on the utilization clamping mechanism, and enable the task to be automatically executed by the small-core processor of the electronic device.

The utilization clamping parameter includes two dimensions of tracking signals, namely, CPU utilization (CPU utilization) and task utilization (CPU utilization by the task). The CPU utilization indicates CPU busyness, and a kernel scheduler drives a CPU based on the CPU utilization, to adjust the frequency. The task utilization indicates the CPU utilization of the task set by a user control, indicating an execution priority of the task. The task utilization may assist the kernel scheduler in a CPU core selection operation. For example, if a task D is not a task in a critical scenario but is identified as a high-load task, user space may set the task utilization for the task D, to reduce the execution priority of the task D, and enable the kernel scheduler to schedule the task D to the small-core processor for execution. For another example, if a task E is identified as a low-load task but is a task in a critical scenario, user space may set the task utilization for the task E, to improve the execution priority of the task E, and enable the kernel scheduler to schedule the task E to the big-core processor for execution.

In an embodiment of this application, the task utilization parameter is a CPU utilization range [util_min, util_max]. The execution priority of the high-load task is reduced by setting util_max in the task utilization parameter of the high-load task to a smaller value, to enable the kernel scheduler to schedule the high-load task to the small-core processor for execution.

As a smartphone system is used as an open ecosystem, the user may download a third-party application from various channels. Due to abnormal application versions or system bugs, some abnormally high-load tasks may be generated. Since the smartphone is a performance-sensitive and power-sensitive device, the generation of abnormally high loads can cause performance and power consumption problems, for example, competing with critical tasks for a big-core CPU, enabling the CPU to run at a high frequency for a long time, and the like. In this embodiment of this application, the normalized load of the task within the statistical window can be determined, and it is determined, based on the normalized load, whether the task is the high-load task, thereby improving accuracy of identifying the high-load task. When it is identified that the task is the high-load task, the high-load task can be managed in a timely manner, to prevent the high-load task from affecting the execution of the critical task.

In another embodiment of this application, after it is determined that the task is the high-load task, it is determined whether the high-load task is the critical task. If it is determined that the high-load task is the critical task, the high-load task does not need to be managed. If it is determined that the high-load task is not the critical task, the high-load task is managed.

In another embodiment of this application, it is determined whether the high-load task is a task of a foreground application. If the high-load task is the task of the foreground application, it is determined that the high-load task is a critical task. If the high-load task is not the task of the foreground application, it is determined that the high-load task is not a critical task.

In another embodiment of this application, it is determined whether the high-load task is a task in a perceivable scenario. If the high-load task is the task in the perceivable scenario, it is determined that the high-load task is a critical task. If the high-load task is not the task in the perceivable scenario, it is determined that the high-load task is not a critical task. The perceivable scenario is a scenario in which a user interface of the electronic device changes.

In an embodiment, if a large quantity of tasks are running simultaneously an electronic device system, normalized loads of the large quantity of tasks across different statistical windows are counted, generating a large amount of data. This may consume significant memory resources.

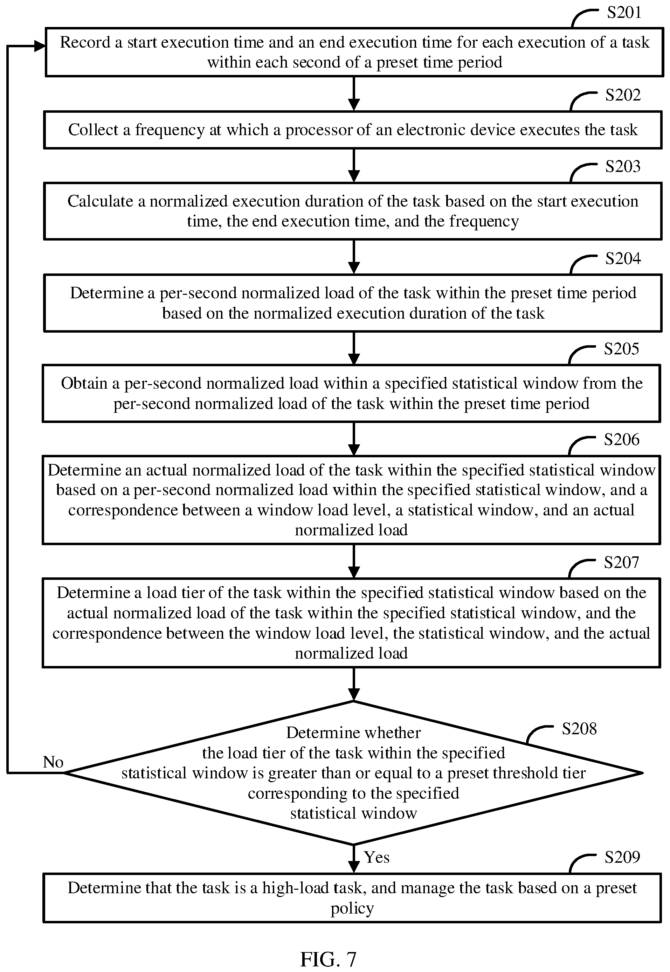

FIG. 7 shows a flowchart of a task management method according to another embodiment of this application. The method is applied to an electronic device, and the task management method includes the following steps.

S201: Record a start execution time and an end execution time for each execution of a task within each second of a preset time period.

In an embodiment of this application, a task management process is created. A statistical window is set to 1 second via the task management process. Within the preset time period, a timer starts timing the statistical window. When the task management process detects that a processor starts executing the task, an elapsed time of the timer is marked, the start execution time of the task is recorded. When the task management process detects that a processor completes the task, an elapsed time of the timer is marked again, and the end execution time of the task is recorded. In this way, a start execution time and an end execution time for each execution of the task within 1 second can be recorded. For example, the preset time period may be 10 seconds, 20 seconds, or another time.

S202: Collect a frequency at which a processor of the electronic device executes the task.

S203: Calculate a normalized execution duration of the task based on the start execution time, the end execution time, and the frequency.

Specific implementations of S202 and S203 are the same as that of S102 and S103, and are not described in detail herein again.

S204: Determine a per-second normalized load of the task within the preset time period based on the normalized execution duration of the task.

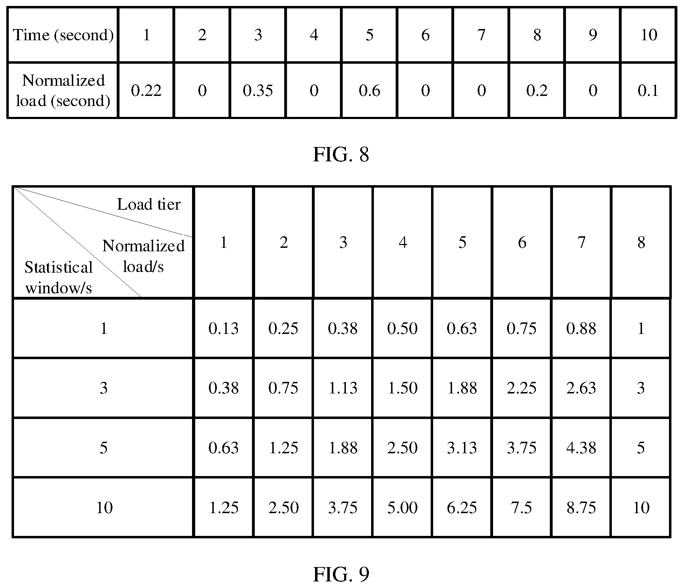

In an embodiment of this application, if the task is executed a plurality of times within each second, a sum of all normalized execution durations of the task executed a plurality of times within each second is calculated, to obtain the per-second normalized load of the task. If the task is executed once within each second, a normalized execution duration of the task executed within each second is determined as the per-second normalized load of the task. The per-second normalized load of the task within the preset time period is obtained based on the per-second normalized load of the task. For example, FIG. 8 shows a per-second normalized load of the task within 10 seconds.

S205: Obtain a per-second normalized load within a specified statistical window from the per-second normalized load of the task within the preset time period.

For example, the specified statistical window is 3 seconds, 5 seconds, 10 seconds, or other times. If the specified statistical window is 3 seconds and the preset time period is 10 seconds, a per-second normalized load within the first 3 seconds is obtained from a per-second normalized load of the task within 10 seconds, specifically including: A normalized load within the 1st second is 0.22 seconds, a normalized load within the 2nd second is 0 seconds, and a normalized load within the 3rd second is 0.35 seconds.

S206: Determine an actual normalized load of the task within the specified statistical window based on a per-second normalized load within the specified statistical window, and a correspondence between a window load level, a statistical window, and an actual normalized load.

FIG. 9 shows a schematic diagram of a correspondence list of a window load level, a statistical window, and an actual normalized load according to an embodiment of this application. In an embodiment of this application, the per-second normalized load within the specified statistical window is compared with the correspondence list of the window load level, the statistical window, and the actual normalized load, to determine a per-second load step within the specified statistical window. An actual normalized load corresponding to the per-second load step within the specified statistical window is determined based on the per-second load step within the specified statistical window and the correspondence list of the window load level, the statistical window, and the actual normalized load, and a sum of a plurality of actual normalized loads corresponding to the per-second load step within the specified statistical window is calculated, to obtain the actual normalized load of the task within the specified statistical window.

For example, if the specified statistical window is 3 seconds, it can be seen from FIG. 8 that a per-second normalized load of the task within 3 seconds is 0.22 seconds (indicating that the normalized load of the task within the 1st second is 0.22 seconds), 0 seconds (indicating that the normalized load of the task within the 2nd second is 0 seconds), and 0.35 seconds (indicating that the normalized load of the task within the 3rd second is 0.35 seconds). It can be seen from FIG. 9 that the actual normalized load of the task within 3 seconds is 0.25 seconds + 0.38 seconds = 0.63 seconds if a load step within 1 second corresponding to 0.22 seconds is step 2, a load step within 1 second corresponding to 0.35 seconds is step 3; and an actual normalized load corresponding to step 2 is 0.25 seconds, and an actual normalized load corresponding to step 3 is 0.38 seconds.

For another example, if the statistical window is 5 seconds, it can be seen from FIG. 8 that a per-second normalized load of the task within 5 seconds is 0.22 seconds, 0, 0.35 seconds, 0 (indicating that the normalized load of the task within the 4th second is 0 seconds), and 0.6 seconds (indicating that the normalized load of the task within the 5th second is 0.6 seconds). It can be seen from FIG. 9 that the actual normalized load of the task within 5 seconds is 0.25 seconds + 0.38 seconds + 0.63 seconds = 1.26 seconds if a load step within 1 second corresponding to 0.22 seconds is step 2, a load step within 1 second corresponding to 0.35 seconds is step 3, and a load step within 1 second corresponding to 0.6 seconds is step 5, an actual normalized load corresponding to step 2 is 0.25 seconds, an actual normalized load corresponding to step 3 is 0.38 seconds, and an actual normalized load corresponding to step 5 is 0.63 seconds.

For another example, if the statistical window is 10 seconds, it can be seen from FIG. 8 that a per-second normalized load of the task within 10 seconds is 0.22 seconds, 0, 0.35 seconds, 0, 0.6 seconds, 0 (indicating that a normalized load of the task within the seventh second is 0 seconds), 0 (indicating that a normalized load of the task within the 8th second is 0 seconds), 0.2 seconds (indicating that a normalized load of the task within the 9th second is 0.2 seconds), 0 (indicating that a normalized load of the task within the 9th second is 0 seconds), and 0.1 seconds (indicating that a normalized load of the task within the 10th second is 0.1 seconds). It can be seen from FIG. 9 that an actual normalized load of the task within 10 seconds is 0.25 seconds + 0.38 seconds + 0.63 seconds + 0.25 seconds + 0.13 seconds = 1.64 seconds if a load step within 1 second corresponding to 0.22 seconds is step 2, a load step within 1 second corresponding to 0.35 seconds is step 3, a load step within 1 second corresponding to 0.6 seconds is step 5, a load step within 1 second corresponding to 0.2 seconds is step 2, a load step within 1 second corresponding to 0.1 seconds is step 1, an actual normalized load corresponding to step 2 is 0.25 seconds, an actual normalized load corresponding to step 3 is 0.38 seconds, an actual normalized load corresponding to step 5 corresponds is 0.63 seconds, and an actual normalized load corresponding to step 1 is 0.13 seconds.

S207: Determine a load tier of the task within the specified statistical window based on the actual normalized load of the task within the specified statistical window, and the correspondence between the window load level, the statistical window, and the actual normalized load.

In an embodiment of this application, the actual normalized load of the task within the specified statistical window is compared with the correspondence list of the window load level, the statistical window, and the actual normalized load, to determine the load tier of the task within the specified statistical window.

For example, the actual normalized load of the task within the statistical window of 3 seconds is 0.63 seconds. By looking up the correspondence list of the window load level, the statistical window, and the actual normalized load shown in FIG. 9, it can be seen that the actual normalized load within the statistical window of 3 seconds is 0.38 seconds when the load step is step 1, the actual normalized load is 0.75 seconds when the load step is step 2, and the actual normalized load of the task within the statistical window of 3 seconds is 0.63 seconds, which is greater than 0.38 seconds and less than 0.75 seconds. Therefore, the load step of the task within the statistical window of 3 seconds is step 2.

For another example, the actual normalized load of the task within the statistical window of 5 seconds is 1.26 seconds. By looking up the correspondence list of the window load level and the actual normalized load shown in FIG. 9, it can be seen that the actual normalized load within the statistical window of 5 seconds is 1.25 seconds when the load step is step 2, the actual normalized load is 1.88 seconds when the load step is step 3, and the actual normalized load of the task within the statistical window of 5 seconds is 1.26 seconds, which is greater than 1.25 seconds and less than 1.88 seconds. Therefore, the load step of the task within the statistical window of 5 seconds is step 3.

For another example, the actual normalized load of the task within the statistical window of 10 seconds is 1.64 seconds. By looking up the correspondence list of the window load level and the actual normalized load shown in FIG. 9, it can be seen that the actual normalized load within the statistical window of 10 seconds is 1.25 seconds when the load step is step 1, the actual normalized load is 2.5 seconds when the load step is step 2, and the actual normalized load of the task within the statistical window of 10 seconds is 1.64 seconds, which is greater than 1.25 seconds and less than 2.5 seconds. Therefore, the load step of the task within the statistical window of 10 seconds is step 2.

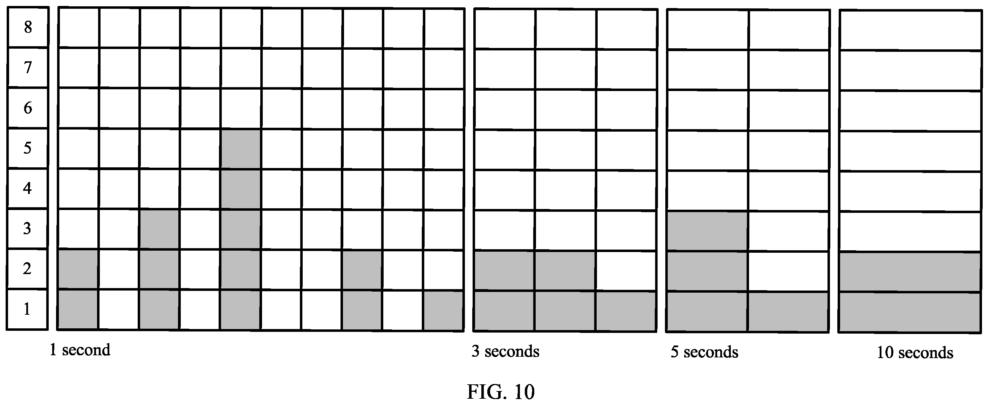

Refer to FIG. 10. Based on the per-second normalized load of the task within 10 seconds, within the specified statistical window of 1 second, it can be determined that the window load level of the task within the 1st second is level 2, the window load level of the task within the 3rd second is level 3, the window load level of the task within the 5th second is level 5, the window load level of the task within the 8th second is level 2, and the window load level of the task within the 10th second is level 1; within the specified statistical window of 3 seconds, it can be determined that the window load level of the task within the first 3 seconds is level 2, the window load level of the task within the second 3 seconds is level 2, and the window load level of the task within the third 3 seconds is level 1; and within the specified statistical window of 5 seconds, it can be determined that the window load level of the task within the first 5 seconds is level 3, and the window load level of the task within the second 5 seconds is level 1; and within the specified statistical window of 10 seconds, the window load level of the task is level 2.

S208: Determine whether the load tier of the task within the specified statistical window is greater than or equal to a preset threshold tier corresponding to the specified statistical window. If the load tier of the task within the specified statistical window is greater than or equal to the preset threshold tier corresponding to the specified statistical window, the process executes S206. If the load tier of the task within the specified statistical window is less than the preset threshold tier corresponding to the specified statistical window, it indicates that the task is a low-load task, and the procedure returns to S201.

S209: Determine that the task is a high-load task, and manage the task based on a preset policy.

The specific implementation of S209 is the same as that of S107, and is not described in detail herein again.

In this embodiment of this application, load levels corresponding to different statistical windows can be determined based on the correspondence between the window load level, the statistical window, and the actual normalized load by only recording the per-second normalized load of the task within the preset time period, without simultaneously calculating load data for different statistical windows. This reduces data storage overhead, and reduces memory occupation of task management data.

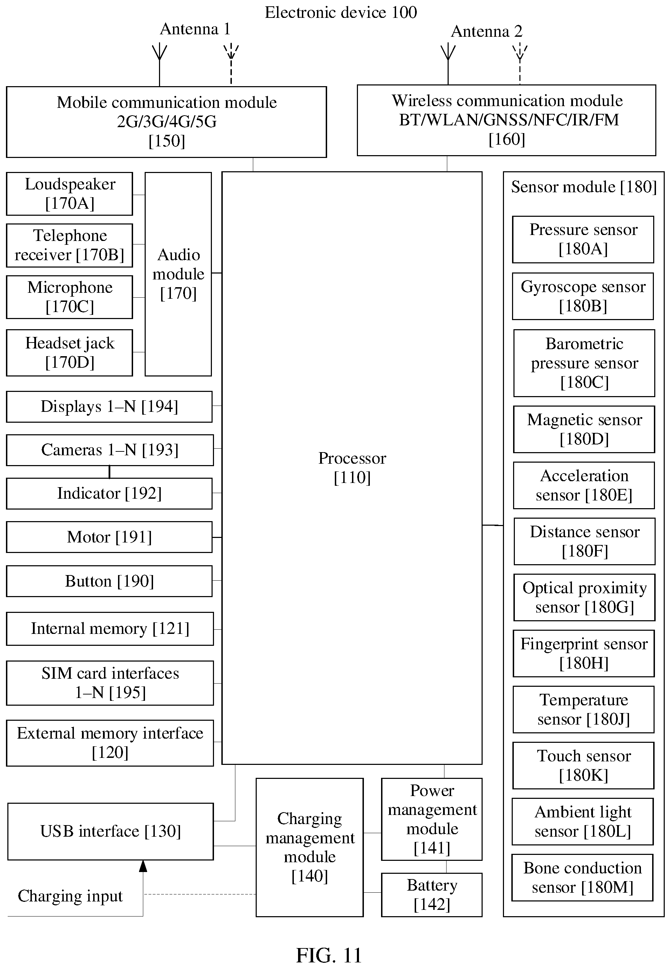

An embodiment of this application further provides an electronic device 100. Refer to FIG. 11. The electronic device 100 may be a mobile phone, a tablet computer, a desktop computer, a laptop computer, a handheld computer, a notebook computer, an ultra-mobile personal computer (Ultra-mobile Personal Computer, UMPC), a netbook, a cellular phone, a personal digital assistant (Personal Digital Assistant, PDA), an augmented reality (Augmented Reality, AR) device, a virtual reality (Virtual Reality, VR) device, an artificial intelligence (Artificial Intelligence, AI) device, a wearable device, a vehicle-mounted device, a smart home device, and/or a smart city device. A specific type of the electronic device 100 is not specifically limited in this embodiment of this application.

The electronic device 100 may include a processor 110, an external memory interface 120, an internal memory 121, a universal serial bus (universal serial bus, USB) interface 130, a charge management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, a proximity light sensor 180G, a fingerprint sensor 180H, a temperature sensor 180J, a touch sensor 180K, an ambient light sensor 180L, a bone conduction sensor 180M, and the like.

It can be understood that the structure illustrated in an embodiment of the present invention does not constitute a specific limitation on the electronic device 100. In some other embodiments of this application, the electronic device 100 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may generate an operation control signal according to instruction operation code and a timing signal, and control obtaining and executing of instructions.

A memory may be further disposed in the processor 110, and is configured to store an instruction and data. In an embodiment of this application, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, and reduces a waiting time of the processor 110, so that system efficiency is improved.

In an embodiment of this application, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In an embodiment of this application, the processor 110 may include a plurality of groups of I2C buses. The processor 110 may be separately coupled to the touch sensor 180K, a charger, a flash, the camera 193, and the like via different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be configured for audio communication. In an embodiment of this application, the processor 110 may include a plurality of sets of I2S buses. The processor 110 may be coupled to the audio module 170 via the I2S bus to implement communication between the processor 110 and the audio module 170. In an embodiment of this application, the audio module 170 may transmit an audio signal to the wireless communication module 160 through the I2S interface, to implement a function of answering a call by using a Bluetooth headset.

The PCM interface may also be configured to perform audio communication, to sample, quantize, and encode an analog signal. In an embodiment of this application, the audio module 170 may be coupled to the wireless communication module 160 through the PCM bus interface. In an embodiment of this application, the audio module 170 may alternatively transmit an audio signal to the wireless communication module 160 via the PCM interface to implement the function of answering a call via a Bluetooth headset. The I2S interface and the PCM interface may both be configured for audio communication.

The UART interface is a universal serial data bus and is configured to perform asynchronous communication. The bus may be a two-way communication bus. The bus converts to-be-transmitted data between Serial communication and parallel communication. In an embodiment of this application, the UART interface is usually configured to connect the processor 110 to the wireless communication module 160. For example, the processor 110 communicates with a Bluetooth module in the wireless communication module 160 by using the UART interface, to implement a Bluetooth function. In an embodiment of this application, the audio module 170 may transmit an audio signal to the wireless communication module 160 via the UART interface, to implement a function of playing music by using the Bluetooth earphones.

The MIPI may be configured to connect the processor 110 to a peripheral device such as the display 194 or the camera 193. The MIPI interface includes a camera serial interface (camera serial interface, CSI), a display serial interface (display serial interface, DSI), and the like. In an embodiment of this application, the processor 110 and the camera 193 communicate with each other by using the CSI interface, to implement an image shooting function of the electronic device 100. The processor 110 communicates with the display 194 by using the DSI interface, to implement a display function of the electronic device 100.

The GPIO interface may be configured by software. The GPIO interface may be configured as a control signal, or may be configured as a data signal. In an embodiment of this application, the GPIO interface may be configured to connect the processor 110 to the camera 193, the display 194, the wireless communication module 160, the audio module 170, the sensor module 180, and the like. The GPIO interface may also be configured as an I2C interface, an I2S interface, a UART interface, a MIPI interface, and the like.

The USB interface 130 is an interface that conforms to the USB standard specification, and may be specifically a Mini USB interface, a Micro USB interface, a USB Type C interface, or the like. The USB interface 130 may be configured to connect to a charger to charge the electronic device 100, may be configured to transmit data between the electronic device 100 and a peripheral device, or may be connected to a headset to play audio through the headset. The interface may also be configured to be connected to another electronic device 100, such as an AR device.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of the interface connection manners.

The charge management module 140 is configured to receive charging input from a charger. The charger may be a wireless charger or a wired charger. In some wired charging embodiments, the charge management module 140 may receive charging input from a wired charger through the USB interface 130. In some embodiments of wireless charging, the charge management module 140 may receive a wireless charging input through a wireless charging coil of the electronic device 100. While charging the battery 142, the charge management module 140 may supply power to the electronic device 100 by using the power management module 141.

The power management module 141 is configured to connect to the battery 142, the charge management module 140, and the processor 110. The power management module 141 receives an input from the battery 142 and/or an input from the charge management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health state (power leakage and impedance). In some other embodiments, the power management module 141 may also be arranged in the processor 110. In some other embodiments, the power management module 141 and the charge management module 140 may also be arranged in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover a single communication frequency band or a plurality of communication frequency bands. Different antennas may be further multiplexed, to improve antenna utilization. For example, the antenna 1 may be reused as a diversity antenna of a wireless local area network. In some other embodiments, the antennas may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In an embodiment of this application, at least some function modules of the mobile communication module 150 may be disposed in the processor 110. In an embodiment of this application, at least some of the functional modules of the mobile communication module 150 may be disposed in a same device as at least some of the modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits, to the baseband processor for processing, the low-frequency baseband signal obtained through demodulation. The low frequency baseband signal is processed by the baseband processor and then transferred to the application processor. The application processor outputs a sound signal by using an audio device (not limited to the speaker 170A, the telephone receiver 170B, and the like), or displays an image or a video by using the display 194. In an embodiment of this application, the modem processor may be a separate device. In some other embodiments, the modem processor may be independent of the processor 110 and may be disposed in a same device as the mobile communication module 150 or another functional module.

The wireless communication module 160 may provide a wireless communication solution that is applied to the electronic device 100 and that includes a wireless local area networks (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices into that integrate at least one communication processing module. The wireless communication module 160 receives an electromagnetic wave through the antenna 2, conducts frequency modulation and filtering on an electromagnetic wave signal, and transmits the processed signal to the processor 110. The wireless communication module 160 may further receive a to-be-transmitted signal from the processor 110, conduct frequency modulation and amplification on the to-be-transmitted signal, and convert an amplified signal into an electromagnetic wave for radiation through the antenna 2.

In an embodiment of this application, in the electronic device 100, the antenna 1 is coupled to the mobile communication module 150, and the antenna 2 is coupled to the wireless communication module 160, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for task management and connects to the display 194 and the application processor. The GPU is configured to perform mathematical and geometric computation, and render an image. The processor 110 may include one or more GPUs that perform program instructions to generate or change display information.

The display 194 is configured to display an image, a video, or the like. The display 194 may include a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Mini-LED, a Micro-LED, a Micro-OLED, a quantum dot light emitting diodes (quantum dot light emitting diodes, QLED), or the like. In an embodiment of this application, the electronic device 100 may include 1 or N displays 194, N being a positive integer greater than 1.

The electronic device 100 may implement a photographing function by using the ISP, the camera 193, the video encoder and decoder, the GPU, the display 194, the application processor, and the like.

The ISP is configured to process data fed back by the camera 193. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may further perform algorithm optimization on noise, brightness, and complexion of the image. The ISP may further optimize parameters such as exposure and color temperature of a photographed scene. In an embodiment of this application, the ISP may be disposed in the camera 193.

The camera 193 is configured to capture a still picture or a video. An optical image is generated for an object by using the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in standard RGB and YUV formats. In an embodiment of this application, the electronic device 100 may include 1 or N cameras 193, where N is a positive integer greater than 1.

The digital signal processor is configured to process a digital signal, and in addition to a digital image signal, the digital signal processor may further process another digital signal. For example, when the electronic device 100 selects a frequency, the digital signal processor is configured to perform Fourier transform, and the like on frequency energy.

The video encoder and decoder are configured to compress or decompress a digital video. The electronic device 100 can support one or more types of video encoders and decoders. In this way, the electronic device 100 may play or record videos in a plurality of coding formats, for example, moving picture experts group (moving picture experts group, MPEG) 1, MPEG 2, MPEG 3, and MPEG 4.

The NPU is a neural-network (Neural-Network, NN) computing processor. By drawing on a structure of a biological neural network, for example, by drawing on a transmission mode between human brain neurons, the NPU quickly processes input information, and may further continuously perform self-learning. The NPU may be used to implement applications such as intelligent cognition of the electronic device 100, for example, image recognition, facial recognition, voice recognition, and text understanding.

The internal memory 121 may include one or more random access memories (Random Access Memories, RAMs) and one or more non-volatile memories (Non-Volatile Memories, NVMs).

The random access memories may include a static-random access memory (Static-Random Access Memory, SRAM), a dynamic random access memory (Dynamic Random Access Memory, DRAM), a synchronous dynamic random access memory (Synchronous Dynamic Random Access Memory, SDRAM), double data rate synchronous dynamic random access memory (Double Data Rate Synchronous Dynamic Random Access Memory, DDR SDRAM, for example, a fifth generation DDR SDRAM is generally referred to as DDR5 SDRAM), and the like.

The non-volatile memory may include a disk storage device and a flash memory (flash memory).

The flash memory may be divided into NOR FLASH, NAND FLASH, 3D NAND FLASH, and the like according to an operation principle, or may be divided into a single-level cell (Single-Level Cell, SLC), a multi-level cell (Multi-Level Cell, MLC), a triple-level cell (Triple-Level Cell, TLC), a quad-level cell (Quad-Level Cell, QLC), and the like according to an electrical potential level of a storage unit, or may be divided into a universal flash storage (Universal Flash Storage, UFS), Embed multimedia storage card (embedded Multi Media Card, eMMC), and the like according to a storage specification.

The random access memory may be directly read and written by the processor 110, may be configured to store executable programs (for example, machine instructions) of an operating system or other running programs, or may be configured to store data of users and applications.

The non-volatile memory may also store executable programs, data of the user and the application, and the like, and may be loaded into the random access memory in advance, to be directly read and written by the processor 110.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The internal memory 121 or the external memory interface 120 is configured to store one or more computer programs. The one or more computer programs are configured to be executed by the processor 110. The one or more computer programs include a plurality of instructions. When the plurality of instructions are executed by the processor 110, the screen display detection method performed on the electronic device 100 in the foregoing embodiments may be implemented, to implement a screen display detection function of the electronic device 100.

The electronic device 100 may implement an audio function by using the audio module 170, the speaker 170A, the telephone receiver 170B, the microphone 170C, the headset jack 170D, the application processor, and the like. The audio function includes, for example, music playing and sound recording.

The audio module 170 is configured to convert digital audio information into analog audio signal for output, and is also configured to convert analog audio input into a digital audio signal. The audio module 170 may further be configured to encode and decode an audio signal. In an embodiment of this application, the audio module 170 may be arranged in the processor 110, or some functional modules of the audio module 170 are arranged in the processor 110.

The speaker 170A, also referred to as a "loudspeaker", is configured to convert an audio electrical signal into a sound signal. The electronic device 100 may listen to the music or answer a hands-free call by using the loudspeaker 170A.

The telephone receiver 170B, also referred to as an "earpiece", is configured to convert an audio electrical audio signal into a sound signal. When the electronic device 100 answers a telephone call or a voice message, the telephone receiver 170B may be placed near a person's ear to answer the voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. The electronic device 100 may be provided with at least one microphone 170C. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, recognize a sound source, implement a directional recording function, and the like.

The headset jack 170D is configured to connect to a wired headset. The headset jack 170D may be a USB interface 130, or may be a 3.5 mm open mobile electronic device 100 platform (Open Mobile Terminal Platform, OMTP) standard interface, or a cellular telecommunications industry association of the USA (Cellular Telecommunications Industry Association of the USA, CTIA) standard interface.

The button 190 includes a power button, a volume button, or the like. The button 190 may be a mechanical button, or a touch-type button. The electronic device 100 may receive button input, and generate button signal input related to user settings and function control of the electronic device 100.

The motor 191 may generate a vibrating alert. The motor 191 may be configured for an incoming call vibration prompt, or may be configured for touch vibration feedback. For example, touch operations applied to different applications (for example, photographing and audio playback) may correspond to different vibration feedback effects. The motor 191 may correspond to different vibration feedback effects for touch operations performed on different regions of the display 194. Different application scenarios (for example, a time reminder, information receiving, an alarm clock, a game, and the like) may also correspond to different vibration feedback effects. Customization of a touch vibration feedback effect may also be supported.

The indicator 192 may be an indicator light that may be configured to indicate a charging state and a power change, or may further be configured to indicate a message, a missed call, a notification, and the like.

The SIM card interface 195 is configured to connect to an SIM card. The SIM card may be inserted into the SIM card interface 195 or removed from the SIM card interface 195, to implement contact with or separation from the electronic device 100. The electronic device 100 may support 1 or N SIM card interfaces, N being a positive integer greater than 1. The SIM card interface 195 may support a Nano SIM card, a Micro SIM card, a SIM card, and the like. A plurality of cards may be inserted into the same SIM card interface 195 together. The plurality of cards may be of a same type or different types. The SIM card interface 195 may be further compatible with SIM cards of different types. The SIM card interface 195 may be further compatible with an external storage card. The electronic device 100 interacts with a network through the SIM card, to implement functions such as call and data communication. In an embodiment of this application, the electronic device 100 uses an eSIM, that is, an embedded SIM card. The eSIM card may be embedded in the electronic device 100, and cannot be separated from the electronic device 100. An embodiment of this application further provides a computer storage medium. The computer storage medium stores computer instructions. When the computer instructions are run on an electronic device 100, the electronic device 100 is enabled to perform the foregoing related method steps to implement the task management method in the foregoing embodiments.

An embodiment of this application further provides a computer program product. When the computer program product is run on a computer, the computer is enabled to perform the related steps to implement the task management method in the foregoing embodiments.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip performs the task management method in the foregoing method embodiments.

The electronic device, the computer storage medium, the computer program product, or the chip provided in the embodiment is configured to perform the corresponding method provided above. Therefore, for beneficial effects that can be achieved by the electronic device, the computer storage medium, the computer program product, or the chip, refer to beneficial effects in the corresponding method provided above. Details are not described herein again.

Through the foregoing descriptions of the implementations, a person skilled in the art may clearly understand that, for the purpose of convenient and brief description, division into the foregoing functional modules is merely used as an example for description. During actual application, the foregoing functions may be allocated to different functional modules and implemented based on a requirement. That is, an inner structure of an apparatus is divided into different functional modules, to implement a part or all of the functions described above.

In the several embodiments provided in this application, it should be understood that the disclosed apparatus and method may be implemented in another manner. For example, the described apparatus embodiment is merely an example. For example, division of modules or units is merely logical function division and may be other divisions during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts displayed as units may or may not be one or a plurality of physical units, that is, may be located at one position, or may be distributed to a plurality of different places. Some or all of the units may be selected based on actual needs, so as to achieve the objective of the solution of the embodiments.

In addition, the functional units in the embodiments of this application may be integrated into one processing unit, or each of the units may exist alone physically, or two or more units may be integrated into one unit. The integrated unit may be implemented in the form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be reflected in a form of a software product. The software product is stored in a storage medium and includes several instructions for enabling a device (which may be a single-chip microcomputer, a chip, or the like) or a processor (processor) to perform all or some of steps of methods in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application, but not for limiting the technical solutions of this application. Although this application is described in detail with reference to the preferred embodiments, a person of ordinary skill in the art should understand that modifications or equivalent replacements may be made to the technical solutions of this application, without departing from the spirit and scope of the technical solutions of this application.

**Claims**

1. A task management method, applied to an electronic device, wherein the method comprises:

   recording a start execution time and an end execution time for each execution of a task within a statistical window;
   collecting a frequency at which a processor of the electronic device executes the task;
   calculating a normalized execution duration of the task based on the start execution time, the end execution time, and the frequency;
   determining an intra-window load of the task based on the normalized execution duration of the task;
   determining an intra-window load ratio of the task based on the intra-window load of the task and the statistical window; and
   if the intra-window load ratio of the task is greater than or equal to a preset threshold, determining that the task is a high-load task, and managing the task based on a preset policy.

2. The task management method according to claim 1, wherein the recording a start execution time and an end execution time for each execution of a task within a statistical window comprises:
   creating a task listener, listening to, via the task listener, a thread for executing the task within the statistical window, recording a creation time of the thread as the start execution time, and recording a destruction time of the thread as the end execution time.

3. The task management method according to claim 1, wherein the collecting a frequency at which a processor of the electronic device executes the task comprises:

   in the execution process of the task, collecting a real-time frequency of the processor at an interval of a preset time cycle; and
   determining a maximum frequency or an average frequency in a plurality of collected frequencies of the processor as the frequency at which the processor executes the task.

4. The task management method according to claim 1, wherein the calculating a normalized execution duration of the task based on the start execution time, the end execution time, and the frequency comprises:

   calculating a difference between the end execution time and the start execution time, to obtain an execution duration of the task; and
   calculating a product of the execution duration of the task, a ratio of the frequency to a theoretical maximum frequency of the processor, and computing power of the processor, to obtain the normalized execution duration.

5. The task management method according to claim 1, wherein the determining an intra-window load of the task based on the normalized execution duration of the task comprises:

   if the task is executed a plurality of times within the statistical window, calculating a sum of all normalized execution durations of the task executed a plurality of times within the statistical window, to obtain the intra-window load of the task; or
   if the task is executed once within the statistical window, determining, as the intra-window load of the task, the normalized execution duration of the task executed within the statistical window.

6. The task management method according to claim 1, wherein the determining an intra-window load ratio of the task based on the intra-window load of the task and the statistical window comprises:
   calculating a ratio of the intra-window load of the task to the statistical window, to obtain the intra-window load ratio of the task.

7. The task management method according to claim 1, wherein the managing the task based on a preset policy comprises:
binding the task to a small-core processor of the electronic device, and executing, by the small-core processor, the task.

8. The task management method according to claim 1, wherein the managing the task based on a preset policy comprises:
setting a utilization clamping parameter for the task by using a utilization clamping mechanism, to enable a small-core processor of the electronic device to execute the task.

9. A task management method, applied to an electronic device, wherein the method comprises:

recording a start execution time and an end execution time for each execution of a task within each second of a preset time period;
collecting a frequency at which a processor of the electronic device executes the task;
calculating a normalized execution duration of the task based on the start execution time, the end execution time, and the frequency;
determining a per-second normalized load of the task within the preset time period based on the normalized execution duration of the task;
obtaining a per-second normalized load within a specified statistical window from the per-second normalized load of the task within the preset time period, wherein the specified statistical window is shorter than or equal to the preset time period;
determining an actual normalized load of the task within the specified statistical window based on the per-second normalized load of the task within the specified statistical window, and a correspondence between a window load level, a statistical window, and an actual normalized load;
determining a load tier of the task within the specified statistical window based on the actual normalized load of the task within the specified statistical window, and the correspondence between the window load level, the statistical window, and the actual normalized load; and
if the load tier of the task within the specified statistical window is greater than or equal to a preset threshold tier corresponding to the specified statistical window, determining that the task is a high-load task, and managing the task based on a preset policy.

10. The task management method according to claim 9, wherein the recording a start execution time and an end execution time for each execution of a task within each second of a preset time period comprises:
creating a task listener, listening to, via the task listener, a thread for executing the task within each second, recording a creation time of the thread as the start execution time of the task, and recording a destruction time of the thread as the end execution time of the task.

11. The task management method according to claim 9, wherein the calculating a normalized execution duration of the task based on the start execution time, the end execution time, and the frequency comprises:

calculating a difference between the end execution time and the start execution time, to obtain an execution duration of the task; and
calculating a product of the execution duration of the task, a ratio of the frequency to a theoretical maximum frequency of the processor, and computing power of the processor, to obtain the normalized execution duration.

12. The task management method according to claim 9, wherein the determining a per-second normalized load of the task within the preset time period based on the normalized execution duration of the task comprises:

if the task is executed a plurality of times within each second, calculating a sum of all normalized execution durations of the task executed a plurality of times within each second, to obtain the per-second normalized load of the task; or
if the task is executed once within each second, determining, as the per-second normalized load of the task, a normalized execution duration of the task executed within each second.

13. The task management method according to claim 9, wherein the determining an actual normalized load of the task within the specified statistical window based on the per-second normalized load of the task within the specified statistical window, and a correspondence between a window load level, a statistical window, and an actual normalized load comprises:

comparing the per-second normalized load of the task within the specified statistical window with a correspondence list of the window load level, the statistical window, and the actual normalized load, to determine a per-second load tier of the task; and
determining an actual normalized load corresponding to the per-second load tier of the task in the correspondence list, and determining a sum of a plurality of actual normalized loads as the actual normalized load of the task within the specified statistical window.

14. The task management method according to claim 13, wherein the determining a load tier of the task within the specified statistical window based on the actual normalized load of the task within the specified statistical window, and the correspondence between the window load level, the statistical window, and the actual normalized load comprises: comparing the actual normalized load of the task within the specified statistical window with the correspondence list of the window load level, the statistical window, and the actual normalized load, to determine the load tier of the task within the specified statistical window.

15. The task management method according to claim 9, wherein the managing the task based on a preset policy comprises:
binding the task to a small-core processor of the electronic device, and executing, by the small-core processor, the task.

16. The task management method according to claim 9, wherein the managing the task based on a preset policy comprises:
setting a utilization clamping parameter for the task by using a utilization clamping mechanism, to enable a small-core processor of the electronic device to execute the task.

17. An electronic device, wherein the electronic device comprises a memory and a processor;

the memory is configured to store program instructions; and
the processor is configured to read and execute the program instructions stored in the memory, and when the program instructions are executed by the processor, the electronic device is enabled to perform the task management method according to any one of claims 1 to 16.

18. A chip, coupled to a memory in an electronic device, wherein the chip is configured to control the electronic device to perform the task management method according to any one of claims 1 to 16.

19. A computer storage medium, wherein the computer storage medium stores program instructions, and when the program instructions are run on an electronic device, a processor of the electronic device is enabled to execute the task management method according to any one of claims 1 to 16.

| Video scenario load | Sliding scenario load |
|---|---|
| Main thread load/rendering thread load | Main thread load/rendering thread load |
| Critical task load | Critical task load |
| Other loads | Other loads |
| Background load | |
| System load | |

FIG. 1

| Source of load | Load type | Task type |
|---|---|---|
| System load | Kernel load | Kworker (Kernel worker), Kthread (Kernel thread), Kswapd (Kernel memory reclaim) |
| | Android system load | Systemserver (System service), Systemui (System interface), Launcher (Launcher) |
| Background load | Application load | Task of a background application |
| | Service load | Log (Log) task, and Hiview (operations and maintenance) |
| Scenario load | Main thread load/ rendering thread load | UI (interface refresh) and Render (Render) |
| | Critical task load | Poll (Poll), Binder (inter-process communication), and Worker (Worker) |
| | Other loads | Log, network, and download |

FIG. 2

FIG. 3

| Application layer | Camera | Calendar | Map | WLAN | Music | Messaging | 101 |
| | Gallery | Phone | Navigation | Bluetooth | ... | | |

| Framework layer | Window manager | View system | Content provider | ... | 102 |

| System library | Surface manager | 3D graphics processing library | Android runtime | 103 |
| | 2D graphics engine | Media library | Image processing library | ... | |

| Hardware abstraction layer | | 104 |

| Kernel layer | Display driver | Touch driver | 105 |
| | Audio driver | Sensor driver | ... | |

| Hardware layer | Display | Camera | Button | 106 |

FIG. 4

S101

Record a start execution time and an end execution time for each execution of a task within a statistical window

S102

Collect a frequency at which a processor processes the task

S103

Calculate a normalized execution time of the task based on the start execution time, the end execution time, and the frequency

S104

Determine an intra-window load of the task based on the normalized execution duration of the task

S105

Determine an intra-window load ratio of the task based on the intra-window load of the task and the statistical window

S106

No — Determine whether the intra-window load ratio of the task is greater than or equal to a preset threshold

Yes

S107

Determine that the task is a high-load task, and manage the task based on a preset policy

FIG. 5

Start execution time      End execution time

Execution
duration of a task

Statistical window

Start time of a
statistical
window

End time of
the statistical
window

FIG. 6

S201

Record a start execution time and an end execution time for each execution of a task within each second of a preset time period

S202

Collect a frequency at which a processor of an electronic device executes the task

S203

Calculate a normalized execution duration of the task based on the start execution time, the end execution time, and the frequency

S204

Determine a per-second normalized load of the task within the preset time period based on the normalized execution duration of the task

S205

Obtain a per-second normalized load within a specified statistical window from the per-second normalized load of the task within the preset time period

S206

Determine an actual normalized load of the task within the specified statistical window based on a per-second normalized load within the specified statistical window, and a correspondence between a window load level, a statistical window, and an actual normalized load

S207

Determine a load tier of the task within the specified statistical window based on the actual normalized load of the task within the specified statistical window, and the correspondence between the window load level, the statistical window, and the actual normalized load

S208

Determine whether the load tier of the task within the specified statistical window is greater than or equal to a preset threshold tier corresponding to the specified statistical window

No

Yes

S209

Determine that the task is a high-load task, and manage the task based on a preset policy

FIG. 7

| Time (second) | 1 | 2 | 3 | 4 | 5 | 6 | 7 | 8 | 9 | 10 |
|---|---|---|---|---|---|---|---|---|---|---|
| Normalized load (second) | 0.22 | 0 | 0.35 | 0 | 0.6 | 0 | 0 | 0.2 | 0 | 0.1 |

FIG. 8

| Statistical window/s \ Normalized load/s \ Load tier | 1 | 2 | 3 | 4 | 5 | 6 | 7 | 8 |
|---|---|---|---|---|---|---|---|---|
| 1 | 0.13 | 0.25 | 0.38 | 0.50 | 0.63 | 0.75 | 0.88 | 1 |
| 3 | 0.38 | 0.75 | 1.13 | 1.50 | 1.88 | 2.25 | 2.63 | 3 |
| 5 | 0.63 | 1.25 | 1.88 | 2.50 | 3.13 | 3.75 | 4.38 | 5 |
| 10 | 1.25 | 2.50 | 3.75 | 5.00 | 6.25 | 7.5 | 8.75 | 10 |

FIG. 9

1 second    3 seconds    5 seconds    10 seconds

FIG. 10

Electronic device 100

Antenna 1 Antenna 2

| Mobile communication module 2G/3G/4G/5G [150] | Wireless communication module BT/WLAN/GNSS/NFC/IR/FM [160] |

Loudspeaker [170A]

Telephone receiver [170B]

Microphone [170C]

Headset jack [170D]

Audio module [170]

Displays 1–N [194]

Cameras 1–N [193]

Indicator [192]

Motor [191]

Button [190]

Internal memory [121]

SIM card interfaces 1–N [195]

External memory interface [120]

USB interface [130]

Charging input

Processor [110]

Charging management module [140]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 11

## INTERNATIONAL SEARCH REPORT

| International application No. |
| --- |
| **PCT/CN2024/143343** |

### A. CLASSIFICATION OF SUBJECT MATTER

G06F9/48(2006.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 任务, 管理, 调度, 执行, 开始, 结束, 执行, 运行, 时间, 时长, 频点, 频率, 窗口, 负载, 阈值, 高, task, manage, dispatch, execute, operate, time, duration, frequency, window, load, threshold, high

### C. DOCUMENTS CONSIDERED TO BE RELEVANT

| Category* | Citation of document, with indication, where appropriate, of the relevant passages | Relevant to claim No. |
| --- | --- | --- |
| A | CN 111104209 A (HUAWEI TECHNOLOGIES CO., LTD.) 05 May 2020 (2020-05-05) description, paragraphs [0005]-[0028] | 1-19 |
| A | CN 113138909 A (GUANGDONG OPPO MOBILE TELECOMMUNICATIONS CORP., LTD.) 20 July 2021 (2021-07-20) entire document | 1-19 |
| A | CN 114253701 A (XFUSION DIGITAL TECHNOLOGIES CO., LTD.) 29 March 2022 (2022-03-29) entire document | 1-19 |
| A | CN 117093374 A (ZHENGZHOU YUNHAI INFORMATION TECHNOLOGY CO., LTD.) 21 November 2023 (2023-11-21) entire document | 1-19 |
| A | US 2021208935 A1 (GUANGDONG OPPO MOBILE TELECOMMUNICATIONS CORP., LTD.) 08 July 2021 (2021-07-08) entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 March 2025** | **28 March 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/143343**

| Patent document cited in search report | | | Publication date (day/month/year) | Patent family member(s) | | | Publication date (day/month/year) |
|---|---|---|---|---|---|---|---|
| CN | 111104209 | A | 05 May 2020 | None | | | |
| CN | 113138909 | A | 20 July 2021 | None | | | |
| CN | 114253701 | A | 29 March 2022 | None | | | |
| CN | 117093374 | A | 21 November 2023 | None | | | |
| US | 2021208935 | A1 | 08 July 2021 | WO | 2020063041 | A1 | 02 April 2020 |
| | | | | EP | 3846027 | A1 | 07 July 2021 |
| | | | | EP | 3846027 | A4 | 02 March 2022 |
| | | | | CN | 110968415 | A | 07 April 2020 |

Form PCT/ISA/210 (patent family annex) (July 2022)

**REFERENCES CITED IN THE DESCRIPTION**

**Patent documents cited in the description**

- CN 202410041940